# EUROPEAN PATENT APPLICATION

(11) **EP 1 747 738 A1**
(43) Date of publication of application: **31.01.2007**
(21) Application number: 06253884.8
(22) Date of filing: 25.07.2006
(51) Int. Cl.: A47J 31/057, A47J 31/46, A47J 31/50

(54) **Beverage maker**

(30) Priority: 25.07.2005 JP 2005214721; 12.05.2006 JP 2006133667
(71) Applicant: IZUMI PRODUCTS COMPANY, Matsumoto, Nagano (JP)
(72) Inventor: Takizawa, Hiroyuki, Matsumoto Nagano (JP); Furuhata, Shinichi, Matsumoto Nagano (JP); Kashiwabara, Shuhei, Matsumoto Nagano (JP); Izumi, Yukio, Matsumoto Nagano (JP)
(74) Representative: Jenkins, Peter David

(57) **Abstract**

A beverage maker for pouring hot water flowing out from a hot water pour-out port provided in the top housing (16) of the main body unit (10) of the beverage maker into a beverage extraction funnel (76), and collecting the extract liquid there extracted in a vessel (66). The beverage maker includes a connecting member (30), which is provided above the beverage extraction funnel (76) and rotated about a vertical axis, and a scatter (70), which is detachably provided on the connecting member (30) and conducts hot water to the beverage extraction funnel (76) so that the hot water drip position and drip volume for the beverage extraction funnel (76) varies according to variation in the liquid surface of the hot water in the scatter (70); and the connecting member (30) conducts hot water received from the hot water pour-out port to prescribed positions in the scatter (70).

## Description

### BACKGROUND OF THE INVENTION

### 1. Field of the Invention

The present invention relates to a beverage maker for pouring hot water into a beverage extraction funnel wherein coffee powder or the like has been placed and extracting an extract liquid such as coffee liquid.

### 2. Description of the Related Art

Coffee makers, which use so-called regular coffee, of a drip type in which hot water at high temperature is poured into a coffee funnel into which coffee powder has been placed, the coffee is extracted, and the dripped coffee liquid is collected, such as a drip type that uses a paper filter, for example, are commonly known.

Japanese Patent Application Laid-Open (Kokai) No. 2005-143702 discloses a beverage maker that pours hot water through a scatter for dispersing and pouring hot water above a coffee extraction funnel. The scatter here is shaped as a bottomed cylinder having a bottom surface that is horizontal and flat, with a plurality of drip holes formed in the bottom surface, wherein the hot water is poured in from above the center of that scatter.

Japanese Utility Model Application Laid-Open (Kokai) No. S52-204528 discloses a beverage maker in which a ring-shaped peripheral hot water-discharging part (16) and a center hot water-discharging part (18) enclosed by that peripheral hot water-discharging part (16) are provided in a scatter (hot water-discharge case (14)) that makes one rotate. In this beverage maker, the center hot water-discharging part (18) is caused to bulge out in the circumferential direction of the peripheral hot water-discharging part (16), and the pour-out port (open end (9)) of a hot water supply pipe (hot water lifting tube (8)) is provided above the peripheral hot water-discharging part (16). While the scatter is rotating, hot water is poured into the peripheral hot water-discharging part (16), and hot water is dripped near the periphery of an extraction funnel (coffee basket (11)); and, when the rotating of the scatter has ended, hot water is poured from the pour-out port into the central hot water-discharge part (18), and hot water is dripped in the vicinity of the center of the extraction funnel

The beverage maker of Japanese Patent Application Laid-Open (Kokai) No. 2005-143702 disperses hot water from the flat bottom surface of a rotating scatter in a balanced manner over the entire surface of an extraction funnel; accordingly, there has been no difficulty therewith, even if hot water is poured into the scatter in the center thereof. However, there are cases in which the bottom surface of the scatter is partitioned by walls and drip holes are provided in the chambers and in which the bottom surface is formed inclined and drip holes are formed at different heights in such an inclined surface. In other words, there are cases in which the hot water drip positions and/or drip volume is varied according to the volume of hot water accumulating in the scatter (according to the height of the hot water surface); and in such cases, it becomes necessary to position the hot water pour-in positions for the scatter not only in the center but also at other specific positions.

Also, in the above-described beverage maker, when the scatter is rotating, the hot water pour-in positions must be varied synchronously with the scatter. As a result, the structure becomes complex. The beverage maker in Japanese Utility Model Application Laid-Open (Kokai) No. S52-204528 merely causes the scatter (hot water-discharge case (14)) to rotate one time and does not accumulate the hot water and manage the drip volume for the extraction funnel; accordingly, it cannot delicately vary the hot water volume during extraction.

### BRIEF SUMMARY OF THE INVENTION

According, it is an object of the present invention, which was devised in view of such circumstances as described above, to provide a beverage maker in which hot water can be poured in at suitable positions in a rotating scatter that is made so that the hot water drip positions and/or drip volume for the beverage extraction funnel can be varied according to variations in the liquid surface of the hot water poured in.

The above object is accomplished by a unique structure of the present invention for a beverage maker in which hot water flowing out from a hot water pour-out port provided in an top housing of the main body unit of the beverage maker is led into a beverage extraction funnel, and extract liquid extracted by the beverage extraction funnel is collected in a vessel (or jug) set below the beverage extraction funnel; and in the present invention, the beverage maker includes:
a connecting member which is provided above the beverage extraction funnel and is rotatable about a vertical axis;
a scatter held by the connecting member in a detachable manner, the scatter being for conducting hot water to the beverage extraction funnel so that a hot water drip position and drip volume for the beverage extraction funnel varies according to variation in a liquid surface of the hot water poured therein; and
a rotational drive unit for rotationally driving the connecting member and scatter;
wherein the connecting member conducts hot water received from the hot water pour-out port to prescribed positions in the scatter.

In the above structure of the present invention, the hot water coming from the hot water pour-out port provided in the top housing of the main body unit is conducted to prescribed positions in the scatter by the rotating connecting member. Here, in the scatter, the drip positions and/or drip volume for the extraction funnel varies according to variation in the liquid surface of the hot water poured in; accordingly, the hot water pour-in positions are controlled in a definite manner by the connecting member, and thus the drip positions and/or drip volume of the hot water dripped into the extraction funnel is suitably maintained. As a result, highly flavorful beverages such as coffee can be made.

In the present invention, the scatter can be mounted on a rotating shaft that is rotatably provided in the top housing of the main body. The connecting member and the scatter can be rotationally driven, integrally with the rotating shaft, by way of rotationally driving the rotating shaft by a rotational drive unit but not limited thereto. For example, a rotating roller separate from the rotating shaft can be provided so that it rolls against the connecting member or the scatter, thus rotationally driving the connecting member and the scatter.

In cases where the rotating shaft that holds the connecting member and the scatter is provided in the top housing of the main body unit, the hot water pour-out port can be designed to open at a position which is offset from that rotating shaft. In this structure, the configuration is simple. However, the hot water pour-out port can be provided concentrically with the rotating shaft. For example, a passageway for passing hot water can be provided in the center of the rotating shaft.

The connecting member can be a dish-shaped hot water receptacle. In this case, since the area of the upper surface is wide, there would not be any problem even if the hot water pour-out port is largely offset from the rotating shaft.

The connecting member can be provided to engage the outer circumference of the upper edge of the scatter in an attachable and detachable fashion. This is because, since the scatter is for accumulating hot water therein, by way of securing the capacity thereof to be sufficiently large and of covering the upper opening of the scatter with the connecting member (or the hot water receptacle), it is possible to prevent the hot water from cooling. Since the hot water receptacle needs to accumulate hot water, it is necessary to make the hot water receptacle substantially cup-shaped, with the inside sunken downward and the circumferential edge made higher; and it is possible that drip holes for dripping hot water at suitable positions in the scatter are formed in the bottom surface of the hot water receptacle.

Various shapes for the hot water receptacle are conceivable that correspond to the hot water drip positions on the scatter side. For example, when allowing hot water to be dripped in the vicinity of the center of the scatter, the hot water receptacle is substantially shaped as an inverted umbrella, and hot water collected in the vicinity of that center and caused to drip in the scatter. When hot water is to be conducted to the vicinity of the periphery of the scatter, then the bottom surface of the hot water is designed so as to be substantially shaped as an inverted umbrella.

The bottom surface of the hot water receptacle can be made horizontal and flat, so that hot water is dispersed substantially evenly and dripped from a plurality of drip holes over substantially the entire surface of the scatter. In this case, the scatter is, for example, divided by upright walls into a plurality of chambers, and drip holes are provided of a prescribed size or of different sizes (diameters) in the chambers, so that the drip positions and/or drip volume for the extraction funnel is varied by the volume of hot water entering the chambers and/or the dimensions (diameters) of the drip holes.

When the hot water receptacle is substantially shaped as an inverted umbrella, a plurality of ribs can be formed in a radiating pattern in the upper surface thereof, and hot water drip holes are provided between the ribs. In this structure, the hot water flowing in the hot water receptacle is directed by the ribs. In other words, even if the hot water receptacle wobbles while rotating, hot water flow will not be disturbed, and hot water can be correctly dripped at the prescribed positions in the scatter.

Furthermore, the present invention is applicable not only to coffee extraction but also to beverage makers that extract other beverages such, for example, as black tea, Japanese tea, and oolong tea, and the present invention comprehends these.

### BRIEF DESCRIPTION OF THE SEVERAL VIEWS OF THE DRAWINGS

Figure 1 is a cross-sectional side view of a coffee maker according to one embodiment of the present invention for a beverage maker, the coffee maker being in an iced coffee extraction mode;
Figure 2 is a rear elevational view thereof;
Figure 3 is a top plan view thereof;
Figure 4 is a cross-sectional side view of the coffee maker in a hot coffee extraction mode;
Figure 5 is an exploded perspective view of the main body of the coffee maker;
Figure 6 is an exploded perspective view of the chuck, hot water receptacle and iced coffee extraction funnel;
Figure 7 is an exploded perspective view of the water reservoir;
Figure 8 is an exploded perspective view of the cooling unit and other parts;
Figure 9 is an overall conceptual illustration of the coffee maker according to the embodiment of the present invention;
Figure 10 is an enlarged cross-sectional view of the vicinity of the chuck of the drive shaft;
Figure 11 is a sectional view of the scatter;
Figure 12 is a conceptual illustration of another embodiment of the present invention;
Figure 13 is a conceptual illustration of another embodiment of the present invention;
Figure 14 is a conceptual illustration of another embodiment of the present invention;
Figure 15 is a conceptual illustration of another embodiment of the present invention; and
Figure 16 is a conceptual illustration of another embodiment of the present invention.

### DETAILED DESCRIPTION OF THE INVENTION

### First Embodiment

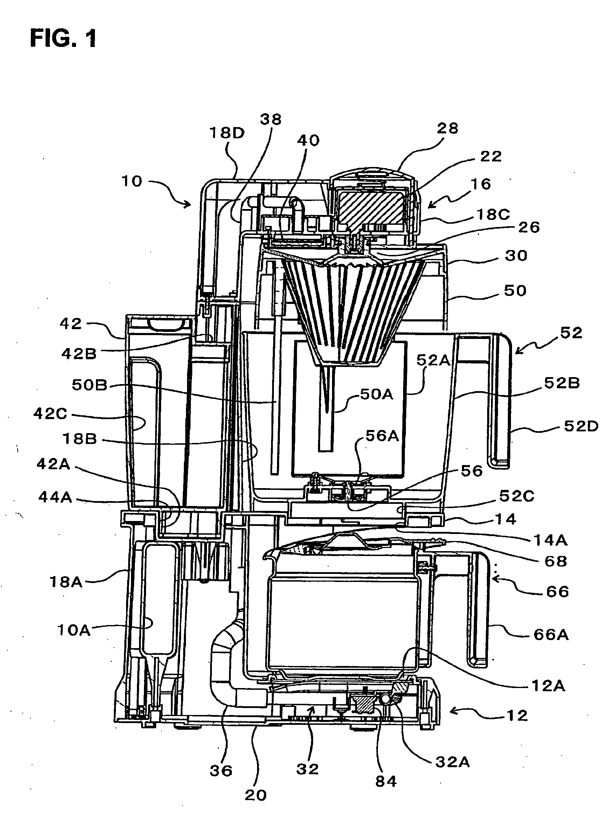

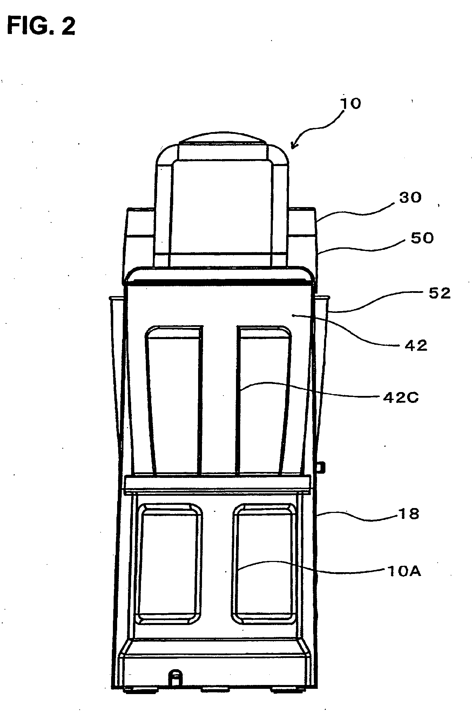

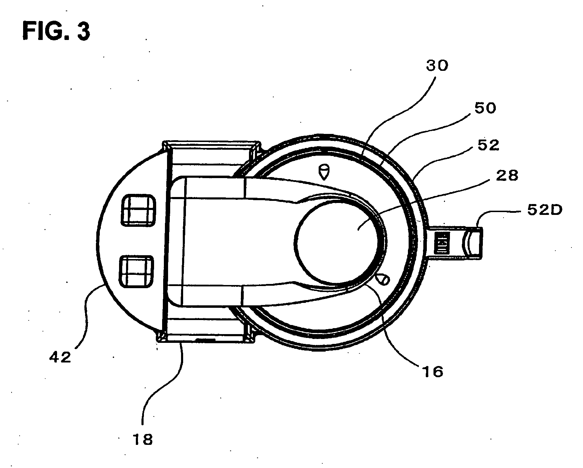

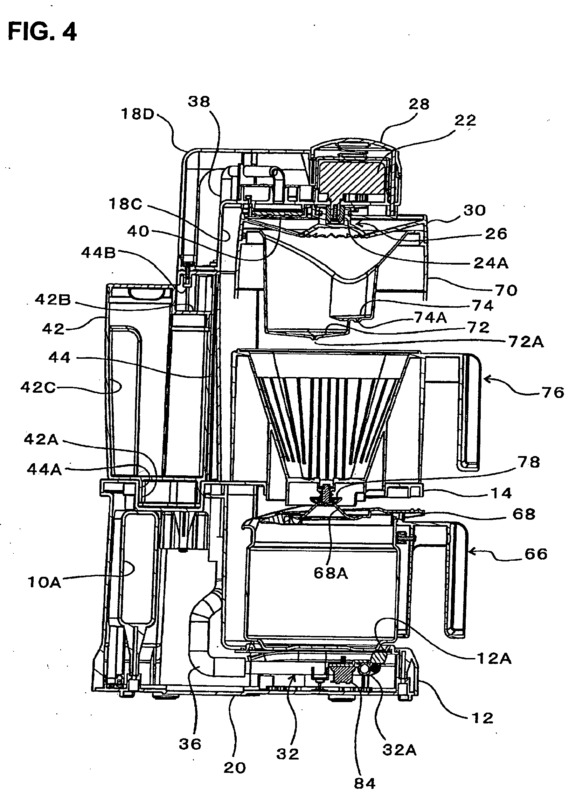

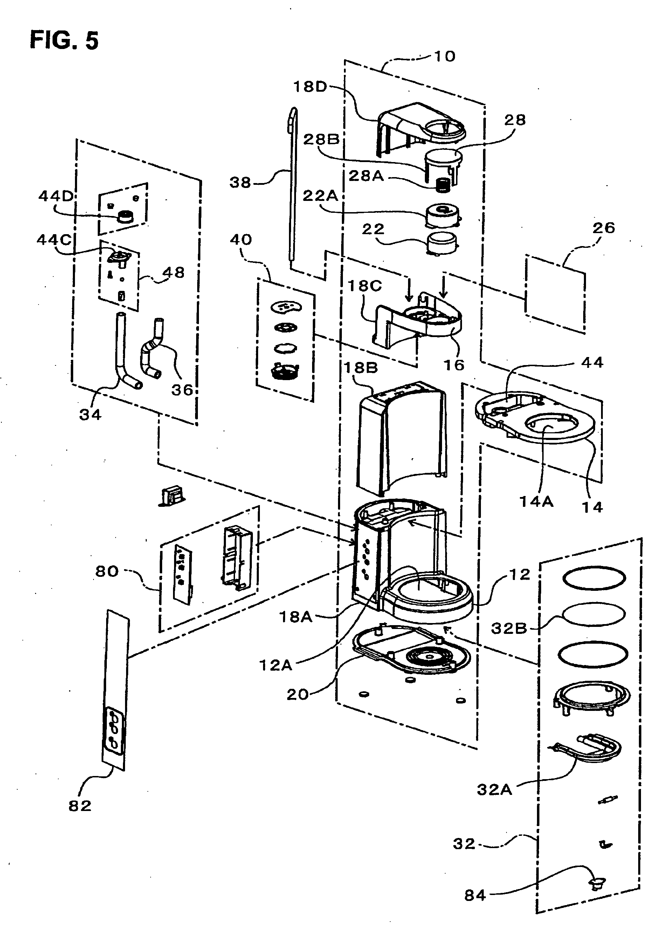

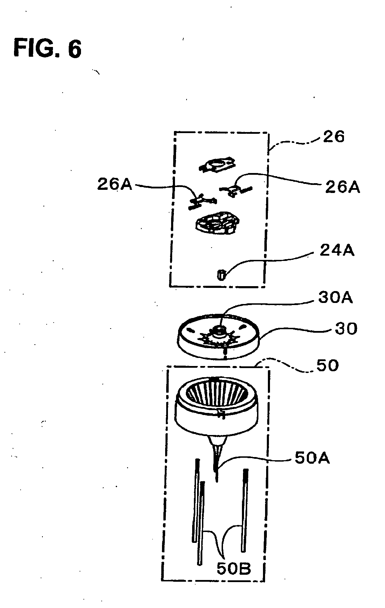

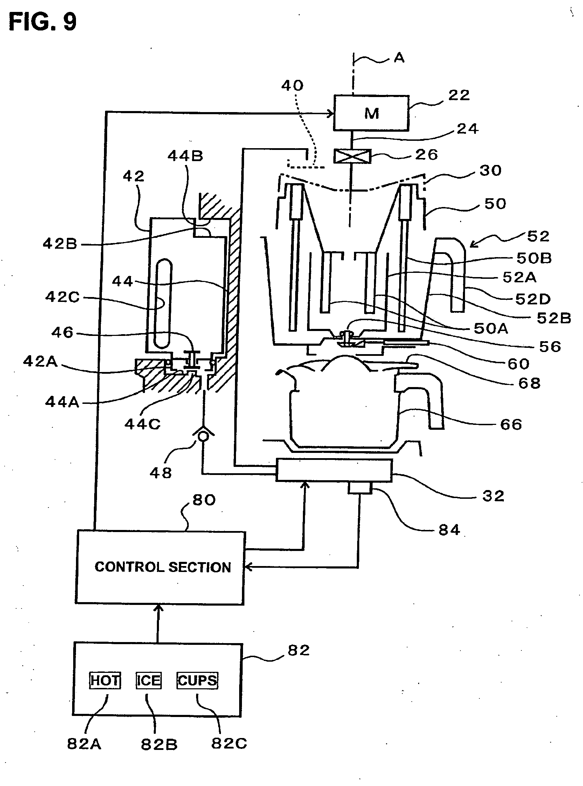

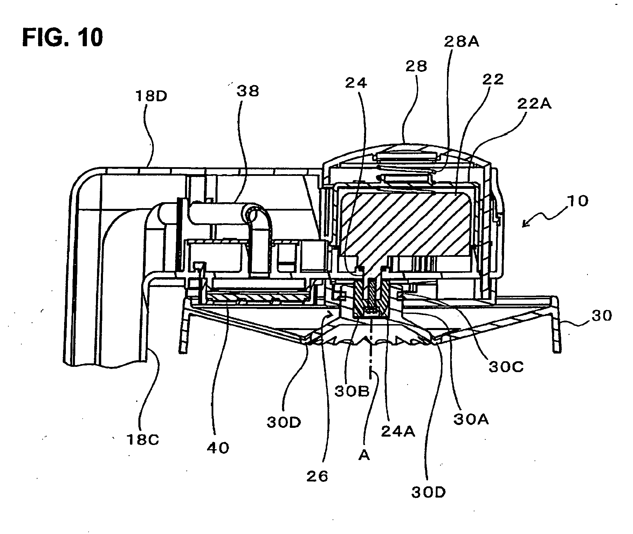

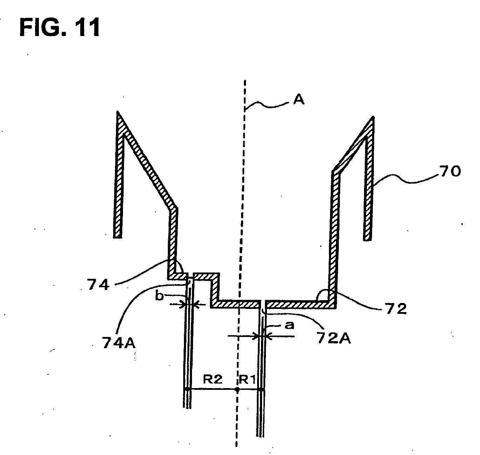

The first embodiment is designed so that the coffee maker is capable of extracting iced coffee and hot coffee, and the present invention is used in the iced coffee extraction mode. Figure 1 is a cross-sectional side view of the coffee maker of this embodiment of the present invention in the iced coffee extraction mode, Figure 2 is a rear elevational view thereof, and Figure 3 is a top view thereof. Figure 4 is a cross-sectional side view of the hot coffee extraction mode of the coffee maker. Figure 5 is an exploded perspective view of the parts of the main body unit of the coffee maker, Figures 6, 7, and 8 are exploded perspective views of the parts thereof, Figure 9 is an overall conceptual illustration, Figure 10 is an enlarged cross-sectional view of the vicinity of the chuck of a drive axis, and Figure 11 shows the cross-section of the scatter.

In these Figures, the reference numeral 10 is the main body of the coffee maker that includes a base housing 12, a partition member 14, and a top housing 16 which are joined by a vertical stand 18. The vertical stand 18, moreover, as shown in Figure 5, is comprised of a lower case 18A, middle case 18B, and upper case 18C stacked and joined in the vertical direction. The base housing 12 is formed integrally in the lower case 18A, and a bottom plate 20 (see Figure 5) is secured to the bottom of the base housing 12.

One end of the partition member 14 is held sandwiched between the joining surfaces of the lower case 18A and the middle case 18B, while the other end of the partition member 14 extends out above the base housing 12.

The upper case 18C is formed so that one end thereof is secured to the upper surface of the middle case 18B, while the other end forms the top housing 16 that extends out above the partition member 14. The upper case 18C is covered from above by an upper case cover 18D, and between the upper case 18C and the upper case cover 18D, a reduced-speed motor 22 is provided.

The reduced-speed motor 22 has speed reduction gears (not shown in the drawings) built in, and the drive shaft 24 (see Figures 9 and 10), which is the output shaft of the reduced-speed motor 22, rotates at low speed. To this drive shaft 24, a hot water receptacle 30, described later, is mounted by a chuck 26 (see Figure 6), so that the hot water receptacle 30 is detachable with respect to the drive shaft 24. The chuck 26 is opened and closed by an attachment/detachment button 28 that is provided in the upper surface of the top housing 16. In other words, the reduced-speed motor 22 is circular, as viewed from above (see Figure 5), and the lid-shaped attachment/detachment button 28 surrounds the upper part of the motor cover 22A in which the reduced-speed motor 22 is provided.

The attachment/detachment button 28 returns upward by a coil spring 28A, and a plurality of projections 28B (see Figure 5) extending downward through the outside of the motor cover 22A are engaged with engagement pawls 26A and 26A of the chuck 26. When the attachment/detachment button 28 is pushed down, the projections 28B open the chuck 26 by opening the engagement pawls 26A and 26A to the outside (that is, they release the hot water receptacle 30). Furthermore, a hexagonal column-shaped bushing 24A is secured to the lower end of the drive shaft 24, while a hexagonal hole 30B (see Figure 10) into which the bushing 24A engages is formed in a hub unit 30A of the hot water receptacle 30. A ring-shaped channel 30C is formed in the outer circumference of that hub unit 30A. With this ring-shaped channel 30C, the semicircular arch-shaped tips of the engagement pawls 26A and 26A are engaged and disengaged.

In the base housing 12 of the main body unit 10, an electric heater 32 is provided. The electric heater 32 heats water conducted from a water reservoir 42, described later, through a water hose 34 (see Figure 5) and makes high-temperature (boiled) hot water which is sent by a hot water hose 36 and hot water pipe 38 provided inside the vertical stand 18 to the top housing 16. The hot water (boiling water) is conducted, through an activated charcoal filter 40 provided adjacent to the drive shaft 24 in the lower surface of the top housing 16, to the above-described hot water receptacle 30.

As is clear from Figure 10, the lateral cross-section of the hot water receptacle 30 is substantially umbrella-shaped (or a substantially inverted umbrella-shaped). In the upper surface of the hot water receptacle 30, a plurality of ribs are formed in the radial direction; and hot water drip holes 30D are formed between the ribs. By suitably setting the distance from the hub unit 30A or the drip holes 30D or by varying the distance for each of the drip holes 30D, the position of the hot water drip relative to an iced coffee extraction funnel 50, described later, attached to the hot water receptacle 30 can be changed.

The heater 32 has (see Figure 5) a heating element 32A bent in substantially a U-shape around a metal pipe, and a circular metal plate 32B is attached to the upper surface of heating element 32A. The metal plate 32B is fitted from below into the circular opening 12A provided in the base housing 12. On the metal plate 32B that faces the opening 12A, a jug 66, described later, is placed; and, in the hot coffee extraction mode, the jug 66 is kept warm.

The water reservoir 42 will be described.

The water reservoir 42 is, as shown in Figures 1 and 4, mounted on the outer surface of the middle case 18B in the main body unit 10. In other words, as seen from Figure 3, the vertical stand 18 has a substantially semicircular shape, as viewed from above, and the water reservoir 42 is shaped so that the horizontal cross-section thereof divides a part of the column vertically, so that the circular arc-shaped outer surface thereof follows, substantially smoothly, the outer surface of the vertical stand 18.

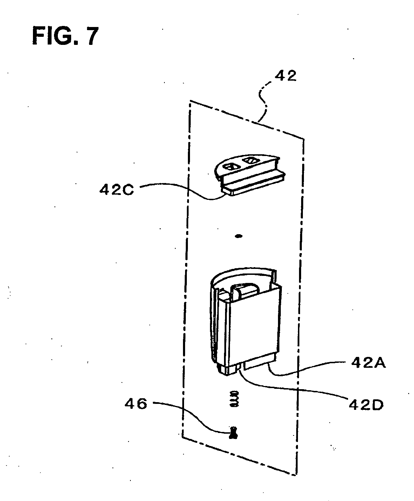

The water reservoir 42 is mounted in a water reservoir mounting chamber 44, and this water reservoir mounting chamber 44 opens outwardly and is provided in the middle case 18B. In the partition member 14 (see Figure 4) that forms the bottom of this water reservoir mounting chamber 44, a concavity 44A, substantially trapezoidal as seen from above, is formed (see Figures 5 and 9); and in the bottom of the water reservoir 42, a convexity 42A, capable of engaging the concavity 44A substantially vertically from above, is formed (see Figure 7). In the upper surface of the water reservoir 42, moreover, a step 42B is formed on the inside (on the inmost side of the water reservoir mounting chamber 44), and the outside of the upper surface of the water reservoir 42 bulges out to the outside of the water reservoir mounting chamber 44. The upper surface of the water reservoir 42 is provided with a cover 42C (see Figure 7).

In the water reservoir mounting chamber 44, a step 44B is formed above the step 42B on the water reservoir 42 so as to be separated by a certain distance, specifically by a distance slightly larger than the depth of the concavity 44A. Accordingly, when the water reservoir 42 is pulled upward from the mounted condition shown in Figures 1 and 4, the step 42B strikes the step 44B in the mounting chamber 44 from below; as a result, thus the upward movement thereof is limited. If, in this condition, the step 42B is released from the step 44B by way of tilting the top of the water reservoir mounting chamber 44 outward, then the water reservoir 42 can be pulled diagonally upward while causing the convexity 42A in the bottom to bulge out from the concavity 44A.

In the outer surface of the water reservoir 42 that is of a circular arc shape, as seen from above, a handle 42C is provided. In the lower case 18A, a handle 10A is provided so as to be positioned below the water reservoir 42.

In the convexity 42A which is in the bottom of the water reservoir 42, a water discharge valve 46 is provided (see Figures 7 and 9). This water discharge valve 46 is in a downwardly moved position by a coil spring so as to close the water discharge path; and when the water reservoir 42 is loaded in the water reservoir mounting chamber 44, the water discharge valve 46 is pushed upward by a projection 44C provided in the concavity 44A, thus opening the water discharge path. The opposing surfaces of the convexity 42A and concavity 44A are tightly sealed; accordingly, water from the water reservoir 42 will flow out only in a volume that will fill the inside of the concavity 44A and will never flow out to the outside of the concavity 44A.

In actuality, moreover, a tube 44D (see Figure 5), surrounding the projection 44C and opening upward, is formed in the water reservoir mounting chamber 44, in the bottom of the water reservoir 42, a tube 42D (see Figure 7) that engages that tube, on the inner diameter side thereof, is formed, and the engaging circumferential surfaces of the two tubes 44D and 42D are tightly sealed. Accordingly, when the water discharge valve 46 opens, the interior of a small void surrounded by the tubes 44D and 42D is filled with water.

As seen from Figure 5, to the bottom of the small void surrounded by the tubes 44D and 42D, the above-described water hose 34 is connected through a check valve 48. As a result, when water from the water reservoir 42 is conducted through the water discharge valve 46, check valve 48, and water pipe 34, into the heater 32 and heated to boiling by the heater 32, then it flows out through the hot water hose 36, hot water pipe 38, and filter 40 into the hot water receptacle 30. At such time, because of the presence of the check valve 48, the boiling water will not flow backward to the water reservoir 42. When the water level inside the heater 32 drops, water is supplied from the water reservoir 42, and the above action is continued.

The iced coffee extraction mode will be described below.

In this iced coffee extraction mode, as seen from Figure 1, an iced coffee extraction funnel 50 is attached to the hot water receptacle 30, and a cooling unit 52 is mounted on the partition member 14. The iced coffee extraction funnel 50, as shown in Figures 1 and 9, has a circular upper edge that is folded back to the outside, and the outer circumference thereof is engageable with the hot water receptacle 30. A joining structure can be effected, for example, such that, in the outer circumference of the upper edge of the funnel 50, a channel bent into a hook shape is formed so that the upper end thereof opens at the upper edge, and a projection that engages the hook-shaped channel is formed on the inner surface of the outer circumferential part of the hot water receptacle 30, so that, when the funnel 50 is pushed in and upward relative to the hot water receptacle 30 while causing the upper end portion of the hook-shaped channel to engage the projection, the projection will be caused, by slightly rotating the funnel 50, to engage in the interior (horizontal portion) of the hook-shaped channel.

As seen from Figures 6 and 9, in the bottom of the funnel 50 are secured with two vanes (stirring vanes) 50A for stirring the coffee liquid; and, from the vicinity of the upper edge of the funnel 50, three stirring rods 50B that constitute vanes for stirring ice water are secured. These stirring vanes 50A and stirring rods 50B extend vertically downward. The radius of rotation of the stirring vanes 50A is set to be smaller than the radius of rotation of the stirring rods 50B.

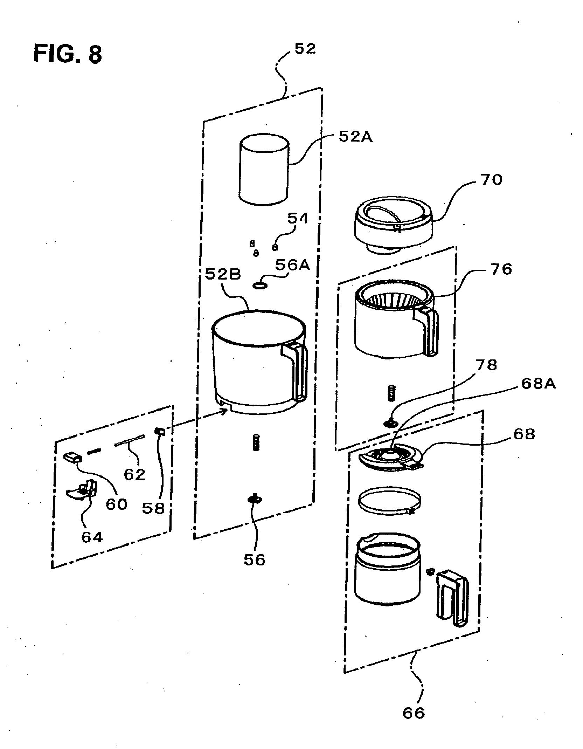

The cooling unit 52 is comprised of a cylindrical coffee liquid receptacle 52A having a bottom and an ice water reservoir 52B, which are combined concentrically. The coffee liquid receptacle 52A is made of a metal having good thermal conductivity such as aluminum. The bottom of the coffee liquid receptacle 52A is secured so that it floats upward (or is raised) from the ice water reservoir 52B with spacers 54 (see Figures 1 and 8) at three locations from the ice water reservoir 52B. As a consequence, ice water also contacts the bottom surface of the coffee liquid receptacle 52A, enhancing the coffee liquid cooling effect.

The center part of the bottom of the coffee liquid receptacle 52A sinks downward and adheres tightly to the ice water reservoir 52B, and a discharge valve 56 passes through the tightly adhering center part. To this discharge valve 56 is applied a downward-oriented return tendency, and the upper end of the discharge valve 56 normally closes the discharge hole in the coffee liquid receptacle 52A by a seal ring 56A (see Figures 1 and 8). The lower end of this discharge valve 56 is formed in a substantially inverted umbrella shape. When this inverted umbrella-shaped part is pushed up from the side by a valve opening/closing piece 58 capable of sliding in the horizontal direction (see Figures 5 and 6), the discharge valve 56 is thereby opened, allowing the coffee liquid to be discharged downward.

As seen from Figures 5 and 6, the valve opening/closing piece 58 is connected by a rod 62 to an operating piece (open/close button) 60 which is located near the outer circumference of the bottom of the ice water reservoir 52B, and it is mounted to the bottom of the ice water reservoir 52B by a cover 64. The operating piece 60, rod 62, and valve opening/closing piece 58 are imparted with a tendency to return to the outside (direction that closes the discharge valve 56) by a coil spring.

The cooling unit 52 is placed on the partition member 14 with the hot water receptacle 30 set on the iced coffee extraction funnel 50, with the stirring vanes 50A of the iced coffee extraction funnel 50 inserted in the coffee liquid receptacle 52A from above, and with the stirring rods 50B inserted in the ice water reservoir 52B from above, so that the whole of these are on the partition member 14. When the cooling unit 52 is placed on the partition member 14c, the circular seat 52C (see Figure 1) provided at the bottom of the ice water reservoir 52B is engaged with a circular hole 14A provided in the partition member 14; as a result, the cooling unit 52 is positionally stabilized. The reference numeral 52D is a handle of the ice water reservoir 52B.

A jug (vessel) 66 is mounted below the cooling unit 52 as shown in Figure 1. This jug 66 is placed on the round plate 32B of the heater 32 (see Figure 5) attached to the opening 12A in the base housing 12, with a thermally insulating mat in between. The cover (or cover plate) 68 for the jug 66A is formed with a convexity 68A (see Figure 4) which is erected in the center of the cover 68, and a plurality of drip holes are formed in a ring-shaped channel surrounding the convexity 68A. As a result, if the operating piece 60 of the cooling unit 52 is pushed from the side to open the discharge valve 56, iced coffee liquid in the coffee liquid receptacle 52A flows down into the jug 66. Reference numeral 66A (see Figure 1) is a handle attached to the jug 66. The convexity 68A of the cover 68 shown in Figure 4 is for pushing up and opening the discharge valve 78 for a hot coffee extraction funnel 76 in the hot coffee extraction mode that will be described later.

In this condition, that is, in the iced coffee extraction mode, the hot water receptacle 30 is attached to the iced coffee extraction funnel 50, the stirring vanes 50A and stirring rods 50B are inserted, respectively, into the coffee liquid receptacle 52A and ice water reservoir 52B of the cooling unit 52, and the whole of these parts is placed on the partition member 14. Then, the hot water receptacle 30 and funnel 50, which form a single unit, are pulled up, allowing the hub unit 30A of the hot water receptacle 30 to be locked to the drive shaft 24 by the chuck 26. As a result, when the motor 22 is started, the hot water receptacle 30 and iced coffee extraction funnel 50 are rotated as a unit together with the drive shaft 24.

When a paper filter and coffee powder (neither shown in the drawings) are set beforehand in the funnel 50, and the heater 32 is caused to heat and hot water is introduced from the filter 40, then the hot water is dispersed by the hot water receptacle 30 and dripped into the funnel 50; and the extracted coffee liquid is accumulated in the coffee liquid receptacle 52A of the cooling unit 52. Ice water has been placed in the ice water reservoir 52B beforehand; accordingly, the extracted coffee liquid is quickly chilled in the coffee liquid receptacle 52A. At that time, both the stirring vanes 50A and the stirring rods 50B are rotated together with the funnel 50, thus stirring the coffee liquid and ice water; accordingly, the coffee liquid cooling effect is significantly great.

When coffee extraction finishes, and the coffee liquid accumulated in the coffee liquid receptacle 52A of the cooling unit 52 has been sufficiently cooled by the ice water, the motor 22 is stopped. When next the operating piece 60 of the discharge valve 56 is pushed from the side to open the discharge valve 56, chilled coffee liquid flows down into the jug (or vessel) 66. Then, the jug 66 is removed from the base housing 12, and the iced coffee therein is poured in a cup.

Next, the hot coffee extraction mode according to the present invention will be described, referring primarily to Figures 4, 5, 8, and 11.

In this hot coffee extraction mode, the scatter 70 is attached to the hot water receptacle 30. In other words, the scatter 70 is attached in place of the iced coffee extraction funnel 50 used in the above-described iced coffee extraction mode. Thus, the hot water receptacle 30 connects the iced coffee extraction funnel 50 to the drive shaft 24 of the reduced-speed motor 22 and it also connects, instead, the scatter 70 to the drive shaft 24 of the reduced-speed motor 22; accordingly, the hot water receptacle 30 is called a connecting member in the present invention. In this scatter 70 are formed a deep concavity 72 at a position including the rotating center axis (centerline) A (see Figure 11) of the drive shaft 24 (see Figures 9 and 10) (through which the center axis A passes), and a shallow concavity 74 not at a position including the rotating center axis A (through which the center axis A does not pass). The bottoms of the two concavities 72 and 74 are continuous in a substantially stair shape as shown in Figure 11.

In the bottom of each of the concavities, a drip hole 72A and 74A, respectively, is formed. The positions R1 and R2 in the radial direction of the drip holes 72A and 74A relative to the rotating center axis A are set so that R1 < R2, and the hole diameter a of the drip hole 72A is smaller than the hole diameter b of the drip hole 74A (a < b).

The radial position R1 of the drip hole 72A is set so that, when coffee powder mainly for a small number of people (one or two people) is put in the funnel 76 described later, the hot water drips along the circle of comparatively narrow radius in the vicinity of the center. On the other hand, the radial position R2 of the drip hole 74A is set so that, when coffee powder for a medium or large number of people is put in the funnel 76, the hot water not only strikes coffee powder positioned near the center but also strikes coffee powder positioned apart from the center. The hole diameters a and b of the drip holes 72A and 74A are set so as to optimize the distribution of the hot water dripping from the drip holes 72 and 74, taking into consideration the differences in the depths from the liquid surface of the hot water accumulated in the scatter 70 (i.e. from the hot water surface).

The reference numeral 76 denotes a hot coffee extraction funnel. This funnel 76 is provided so as to be locked in the hole 14A of the partition member 14. The locking structure is made, for example, so that an engagement projection provided on the funnel 76 is engaged in a hook-shaped channel formed in the inner circumferential surface of the hole 14A, and the funnel 76 is rotated slightly in the horizontal direction to lock the funnel 76. In the bottom of this funnel 76 is provided a discharge valve 78. The discharge valve 78 has a structure similar to that of the discharge valve 56 of the cooling unit 52 described above.

The discharge valve 78 has a tendency to return or move downward; and, while a seal ring attached to its upper end closes the discharge hole of the funnel 76, the lower end of the discharge valve 78 is formed in a substantially inverted umbrella shape. The discharge valve 78 opens the discharge hole when its inverted umbrella-shaped part is pushed up from below. When the jug 66 is set below the partition member 14 (on the base housing 12), the convexity 68A of the cover 68 of the jug 66 makes contact from below with the lower end of the discharge valve 78; and, due to the inclined surface of the convexity 68A, the cover 68 is pushed up and opens the discharge hole of the funnel 76 automatically. Hot coffee extraction is conducted with the jug 66 set in this condition. At this time, the funnel 76 is locked to the partition member 14, and thus the funnel 76 is pushed up by the jug 66 and will not ever float.

In the above-described hot coffee extraction mode, a paper filter and coffee powder are first set in the funnel 76, and the funnel 76 is next secured (locked) to the partition member 14. Then, when the heater 32 is made to emit heat, and boiling water is poured into the hot water receptacle 30, hot water enters the scatter 70. The hot water first enters the deep concavity 72, and drips from the drip hole 72A in the vicinity of the center of the funnel 76. Since the scatter 70 is rotated together with the drive shaft 24, dripping occurs on a small circle in the vicinity of the center of the funnel 76.

The volume of hot water flowing into the funnel 76 from the hot water receptacle 30 is set so that it is greater than the volume of drip from the drip hole 72A, so that the liquid surface (hot water surface) in the deep concavity 72 rises. When the liquid surface of the hot water rises and spreads to the shallow concavity 74, hot water begins to drip also from the drip hole 74A; and when the liquid surface rises further, hot water is dripped from both of the drip holes 72A and 74A.

As described above, the radial position R2 of the drip hole 74A is greater than the radial position R1 of the drip hole 72A. Accordingly, the hot water dripping from the drip hole 74A drips on a circle that is distant from the center of the funnel 76. As a result, hot water can be suitably dispersed and dripped onto the coffee powder inside the funnel 76. In this manner, it is possible to at first pour most of the hot water in the vicinity of the center of the funnel 76, and then, after the coffee powder has been suitably steamed, to have the hot water poured also nearer to the outer circumference and create optimal extraction conditions. It is thus possible to extract hot coffee which is highly fragrant and has good taste.

Furthermore, since there is a gap between the funnel 76 and the scatter 70 (see Figure 4), the operator is able to view the inside of the funnel 76 from this gap. In other words, the condition wherein foam is generated inside the funnel 76 can be verified. As a result, pleasure increases when extracting coffee.

Next, a control section 80 will be described with reference to Figures 5 and 9.

The control section 80 controls the heater 32 and the motor 22 based on the beverage type, hot or ice, and on the number of portions (number of cups) to be extracted, which are set by the input means 82. The input means 82 have switches 82A and 82B for inputting either hot (H) or ice (I), and a switch 82C for inputting how many cups (extraction quantity). The control section 80 determines hot or ice based on an ON input from either switch 82A or switch 82B, and it determines how many cups (extraction quantity) by the number of f of switch 82C.

The control section 80 controls the volume of hot water poured in by changing the heating time with the heater 32 according to the extraction quantity. When heating for a time To for one person, for example, the heating time is made 2T₀ in case for two persons, and 3T₀ if it is for three persons. The control section may change the flow-out volume in response to the type, whether hot or ice. When it is desired to extract strong coffee for iced coffee, for example, then the flow-out volume is made less, so that the heating time is set shorter than when extracting hot coffee.

It can be set so that the control section 80 changes the hot water flow-out speed for hot or iced coffee. For iced coffee, for example, the flow-out speed is made slower in order to extract strongly. As a result, the temperature of the heater 32 is set lower than when extracting hot coffee. A temperature sensor 84 for detecting the heater temperature can provided as shown in Figures 4 and 9, for example, so that the control section 80 performs feedback control in response to the heater temperature.

In the embodiment described above, selection can be made for a hot coffee extraction mode and an iced coffee extraction mode, but a part of the configuration used in this embodiment is applicable to a coffee maker so that it used exclusively in one of two modes. Using the scatter 70 attached to the drive shaft 24 at the top of the main body unit (in a manner that it is either detachable or undetachable), a coffee maker for extracting only hot coffee or a coffee maker for extracting only iced coffee can be made. In the latter case in which the coffee maker uses a scatter, an iced coffee extraction funnel is held in the main body unit; and as in the case of extracting hot coffee, hot water can be dispersed over the entire funnel, and it is possible to visually verify the situation inside the funnel during extraction.

The bottom of the scatter can be made in a conical shape so that the scatter is deep in the vicinity of the center, and it can also be made in a multi-step stair shape (including two steps or two or more steps) so that the scatter is deep in the vicinity of the center and it becomes shallower in steps toward the vicinity of the periphery. Either one or a plurality of drip holes is provided at positions thereof depth in the scatter.

When the scatter bottom is made in a stair shape, the liquid surface of the hot water will change (become lower) continuously, and the height of the drip holes provided in steps will change non-continuously, so that it is easy to adjust the relationship between the volume of hot water and the number of drip holes (for dripping hot water) used. Adjustment can be made, for example, so that only drip holes at deep positions in the vicinity of the center are used when extracting for one person, preventing hot water from dripping in the region where there is no coffee powder at the funnel periphery, or so that the hot water is dispersed and made to drip over a wide range out to the vicinity of the funnel periphery when extracting portions for many people.

The structure, in which steps 42B and 44B are formed, respectively, separately by a certain measure in the vertical direction in the water reservoir 42 and the water reservoir mounting chamber 44, is applicable to a dedicated coffee maker for extracting either hot coffee only or iced coffee only, with the above-described advantages.

Also, the above configuration for the water reservoir 42 and water reservoir mounting chamber 44 is applicable to water reservoirs or liquid reservoirs or the like used in small electric products other than coffee makers, such, for example, as interior humidifiers, or humidifiers provided in cosmetic equipment or heating equipment.

The configuration for controlling the hot water extraction volume according to the heating time with the heater 32 can also be applied to dedicated coffee makers for hot coffee or iced coffee. In such cases, the heater heating time can be monitored with a timer, and the structure will not become complex because the control section 80, formed by a microcomputer, already includes a timer.

Furthermore, the stirring vanes 50A and stirring rods 50B attached to the iced coffee extraction funnel are applicable to a dedicated coffee maker for iced coffee. As described in the foregoing, the configurations of the above-described embodiment are applicable to dedicated iced coffee makers and not only to coffee makers for both hot and iced coffee. Second embodiment

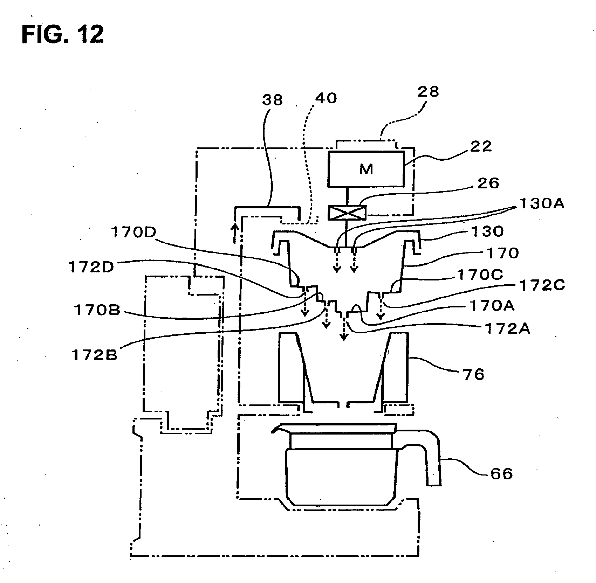

Figure 12 is a cross-sectional side view of the coffee maker of another embodiment of the present invention.

In this second embodiment, the hot water receptacle 130 is substantially shaped as an inverted umbrella and has a drip hole 130A in the vicinity of the center. The scatter 170 has a deepest concavity 170A in the vicinity of the center, and it also has concavities 170B, 170C, and 170D about the deepest concavity 170A which become shallower in stages. Drip holes 172A to 172D having differing diameters are provided in the concavities.

In second embodiment, hot water dripping from the drip hole 130A of the hot water receptacle 130 is concentrated at the deepest concavity 170A of the scatter 170 and drip into the extraction funnel 76. In other words, the hot water will drip into the extraction funnel 76 centered on the drip hole 172A in the center; as a result, much hot water will be dripped in the vicinity of the center of the extraction funnel 76. By altering the size of the concavities 170A and the like and/or the size of the drip holes 172A and the like, the drip volume can be changed, providing a time differential for the start of drip from the drip holes 172A to 172D.

In Figure 12, the same reference numerals are used for the parts that are the same as those in the first embodiment of Figure 1 to 11, and descriptions thereof are omitted.

### Third embodiment

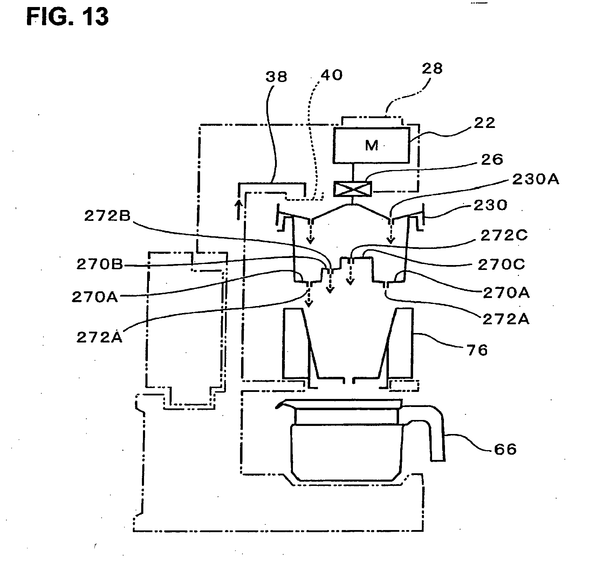

Figure 13 is a cross-sectional side view of the coffee maker of another embodiment of the present invention.

In this third embodiment, the hot water receptacle 230 is substantially umbrella shaped, having drip holes 230A in the vicinity of the periphery. The scatter 270 has a deepest circular cylindrical concavity 270A in the vicinity of the periphery thereof, and terraces 270B and 270C of differing heights inside the circumference deepest concavity 270A. Drip holes 272A to 272C having differing diameters are provided in the concavity 270A and the terraces 270B and 270C.

In this third embodiment, hot water is dripped more at the periphery of the extraction funnel 76. Also, by the size of the concavities 270A and the like and/or the dimensions of the drip holes 272A to 272C, the drip volume can be changed, providing a time differential for the start of drip from the drip holes 272A to 272C.

In Figure 13, the same reference numerals are applied to the parts that are the same as in the first embodiment of Figure 1 to 11, and descriptions thereof are omitted. Fourth embodiment

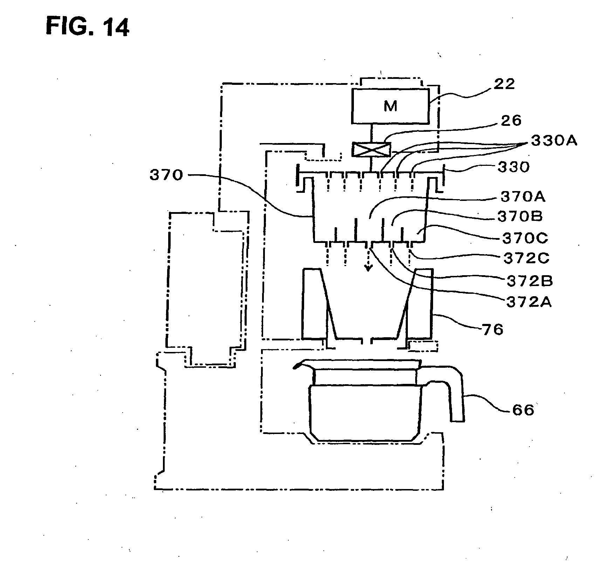

Figure 14 is a cross-sectional side view of the coffee maker of still another embodiment of the present invention.

In this fourth embodiment, the bottom surface of the hot water receptacle 330 is horizontal and flat, and the bottom is provided with a plurality of drip holes 330A. Furthermore, the bottom surface of the scatter 370 is horizontal and flat, and three concentrically shaped chambers 370A, 370B, and 370C are formed in the bottom by circular cylindrical walls of differing heights, and drip holes 372A to 372C of a prescribed size (diameter) or of differing diameters are formed in the chambers 370A to 370C.

In the fourth embodiment, hot water is substantially evenly dispersed and dripped from the hot water receptacle 330 and enters the chambers of the scatter 370. The volume of hot water dripping from the chambers into the extraction funnel 76 is determined by the height of the hot water surface in the chambers 370A to 370C and/or the dimensions of the drip holes 372A to 372C. Accordingly, by setting the sizes of the chambers 370A to 370C and/or the dimensions of the drip holes 372A to 372C, the distribution of the hot water dripping into the extraction funnel 76 can be optimally set.

In Figure 14, the same reference numerals are applied to the parts that are the same as in the first embodiment shown in Figure 1 to 11, and descriptions thereof are omitted. Fifth embodiment

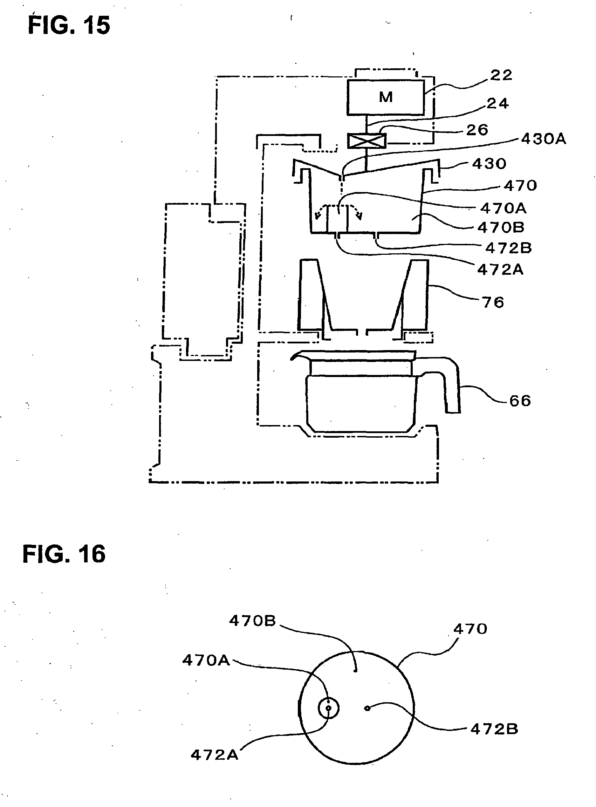

Figure 15 is a side view of the coffee maker of still another embodiment of the present invention, and Figure 16 is a top view of the scatter used therein.

In this fifth embodiment, the drip hole 430A is provided at a position offset from the center axis (drive shaft) of the hot water receptacle 430. The bottom surface of this hot water receptacle 430 is gently inclined toward the drip hole 430A, and it also can be a spiral shaped terrace that descends toward the drip hole 430A.

The scatter 470 used with this hot water receptacle 430 has a horizontal, flat bottom surface, and first and second chambers 470A and 470B are formed by cylindrical walls that are opened upward and positioned below the drip hole 430A. Drip holes 472A and 472B are formed in the chambers 470A and 470B.

In this fifth embodiment, hot water that has entered the hot water receptacle 430 from the hot water pipe 38 (see Figures 1 and 3, for instance) is conducted to the drip hole 430A by the inclined surface of that hot water receptacle 430 or by the spirally shaped terrace thereof, and then it drips into the first chamber 470A of the scatter 470. Accordingly, hot water enters the extraction funnel 76 first from the first drip hole 472A. Here, the volume of hot water entering the first chamber 470A in a unit time from the hot water receptacle 430 is set larger than the volume of hot water dripping out in the unit time from the first drip hole 472A. As a result, hot water will accumulate in the first chamber 470A, and the hot water surface will gradually rise.

When the hot water surface in the first chamber 470A exceeds the wall, overflowing hot water flows into the second chamber 470B, so that hot water begins to drip through the second drip hole 472B also.

As seen from the above, in this fifth embodiment, at first hot water drips from the first drip hole 472A. Then, after a certain time delay, hot water begins to drip also from the second drip hole 472B. Thereafter, hot water will continue dripping from both drip holes 472A and 472B. Accordingly, by setting the sizes of the drip holes 472A and 472B and/or the arrangement and size or the like of the chambers 470A and 470B, the positions and volume of hot water entering the extraction funnel 76 can be optimized.

## Claims

1. A beverage maker in which hot water flowing out from a hot water pour-out port provided in an top housing of a main body unit of said beverage maker is led into a beverage extraction funnel, and extract liquid extracted by said beverage extraction funnel is collected in a vessel provided below said beverage extraction funnel, wherein said beverage maker is comprised of:
a connecting member which is provided above said beverage extraction funnel and is rotatable about a vertical axis;
a scatter held by said connecting member in a detachable manner, said scatter conducting hot water to said beverage extraction funnel so that a hot water drip position and drip volume for said beverage extraction funnel varies according to variation in a liquid surface of the hot water poured therein; and
a rotational drive unit for rotationally driving said connecting member and scatter; and
wherein said connecting member conducts hot water received from said hot water pour-out port to prescribed positions in said scatter.

2. The beverage maker according to claim 1, wherein said scatter is mounted via said connecting member on a vertical rotating shaft provided in said top housing of said main body unit in a rotatable manner.

3. The beverage maker according to claim 2, wherein
said vertical rotating shaft provided in said top housing of said main body unit is rotationally driven by a rotational drive unit; and
said scatter, together with said connecting member, is provided detachably on said rotating shaft.

4. The beverage maker according to claim 2 or 3, wherein said hot water pour-out port opens at a position that is offset from said rotating shaft.

5. The beverage maker according to claim 4, wherein said connecting member is a hot water receptacle for conducting hot water from said hot water pour-out port to prescribed positions in said scatter.

6. The beverage maker according to claim 2 or 3, wherein said connecting member is provide in a detachable manner to outer circumference of an upper edge of said scatter.

7. The beverage maker according to claim 5, wherein said hot water receptacle is substantially cup-shaped, with an inside thereof sunken downward and a circumferential edge made higher, having drip holes in a bottom surface thereof for dripping hot water at different positions in said scatter.

8. The beverage maker according to claim 7, wherein said hot water receptacle is substantially shaped as an inverted umbrella, having drip holes for conducting hot water in a vicinity of a center of said scatter.

9. The beverage maker according to claim 7, wherein a bottom surface of said hot water receptacle is substantially umbrella shaped, having drip holes for conducting hot water in a vicinity of a periphery of said scatter.

10. The beverage maker according to claim 7, wherein
said hot water receptacle has a bottom surface that is substantially horizontal and flat with a plurality of drip holes provided in said bottom surface, thus conducing the hot water substantially evenly dispersed over an entire surface of said scatter.

11. The beverage maker according to claim 7, wherein said bottom surface of said hot water receptacle has a spiral-shaped terrace that gradually descends toward said drip holes at prescribed positions.

12. The beverage maker according to claim 7 or 8, wherein said bottom surface of said hot water receptacle is substantially shaped as an inverted umbrella, with a plurality of ribs formed in a radiating pattern in an upper surface thereof and said hot water drip holes formed between said ribs.
